(19) Europäisches Patentamt
European Patent Office
Office européen des brevets

(11) **EP 4 676 043 A1**

(12) **EUROPEAN PATENT APPLICATION**

(43) Date of publication:
**07.01.2026 Bulletin 2026/02**

(21) Application number: **24306109.0**

(22) Date of filing: **04.07.2024**

(51) International Patent Classification (IPC):
**H04N 19/117** (2014.01)  **H04N 19/70** (2014.01)
**H04N 19/156** (2014.01)  **H04N 19/85** (2014.01)

(52) Cooperative Patent Classification (CPC):
**H04N 19/117; H04N 19/156; H04N 19/70;
H04N 19/85**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **DEMARTY, Claire-Helene
35520 MONTREUIL LE GAST (FR)**

• **AUMONT, Franck
35770 VERN SUR SEICHE (FR)**
• **LE MEUR, Olivier
35160 TALENSAC (FR)**
• **BLONDE, Laurent
35235 THORIGNE-FOUILLARD (FR)**
• **REINHARD, Erik
35630 HEDE-BAZOUGES (FR)**

(74) Representative: **Interdigital
Immeuble ZEN 2
845 A, avenue des Champs Blancs
35510 Cesson-Sévigné (FR)**

(54) **ENERGY INFORMATION FOR NEURAL NETWORK POST FILTER**

(57) Specific syntax elements define energy characteristics of a neural network post-processing filter (NNPF) used in a video coding system. An encoded video bitstream carries such syntax elements from an encoding device to a decoding device, thus allowing the encoding device to provide energy consumption information related to the NNPF and allowing the decoding device to handle its energy consumption by deciding whether or not it should apply the NNPF. An encoding method, a decoding method, an encoding apparatus and a decoding apparatus are described.

Figure 8A

EP 4 676 043 A1

**Description**

TECHNICAL FIELD

At least one of the present embodiments generally relates to a video encoding and decoding method and device, and more particularly to syntax elements defining an energy information for a neural network post-processing filter.

BACKGROUND ART

To achieve high compression efficiency, image and video coding schemes usually employ prediction and transform to leverage spatial and temporal redundancy in the video content. Generally, intra or inter prediction is used to exploit the intra or inter frame correlation, then the differences between the original image block and the predicted image block, often denoted as prediction errors or prediction residuals, are transformed, quantized and entropy coded. During encoding the original image block is usually partitioned/split into sub-blocks for example using quad-tree partitioning. To reconstruct the video, the compressed data is decoded by inverse processes corresponding to the prediction, transform, quantization and entropy coding.

Reducing energy consumption of electronic devices has become a requirement not only for manufacturers of electronic devices but also to limit, as much as possible, the environmental impact and to contribute to the emergence of a sustainable entertainment and ICT (Information, Communication and Technology) industries. The increase in display resolution from SD to HD, then to 4K and soon to 8K and beyond, as well as the introduction of high dynamic range imaging, has brought about a corresponding increase in energy requirements of the devices involved in this domain. This is not consistent with the global need to reduce energy consumption at all levels of the entertainment distribution chain.

Modem video coding system may comprise neural-network post-filters to perform post-processing operations after the image or video decoding operation. Such post-filters are more or less complex, and this may impact more or less the amount of energy required firstly for their usage and secondly as a consequence of their usage, as the processed content will be modified. It is therefore interesting to introduce data and methods to handle the energy consumption while running these post-filters or when displaying image, for example on consumer electronics displays, or more generally while using the post-filtered video content.

SUMMARY

According to a first aspect of at least one embodiment, a method comprises obtaining video data, generating a supplemental enhancement information message comprising a syntax element indicating an energy parameter related to a neural network post-processing filter, encoding video data, generating a bitstream comprising the encoded video data and the supplemental enhancement information message and providing the bitstream.

According to a second aspect of at least one embodiment, a method comprises obtaining a bitstream comprising encoded video data and a supplemental enhancement information message comprising a syntax element indicating an energy parameter related to a neural network post-processing filter, decoding video, in the case where an energy criterion is respected, modifying the decoded video by applying the neural network post-processing filter, and providing the modified video.

According to a third aspect of at least one embodiment, an apparatus comprises one or more processors configured to obtain video data, generate a supplemental enhancement information message comprising a syntax element indicating an energy parameter related to a neural network post-processing filter, encode video data, generate a bitstream comprising the encoded video data and the supplemental enhancement information message, and provide the bitstream.

According to a fourth aspect of at least one embodiment, an apparatus comprises one or more processors configured to obtain a bitstream comprising encoded video data and a supplemental enhancement information message comprising a syntax element indicating an energy parameter related to a neural network post-processing filter, decode video, in the case where an energy criteria is respected, modify the decoded video by applying the neural network post-processing filter and provide the modified video.

One or more of the present embodiments also provide a computer readable storage medium having stored thereon instructions according to at least part of any of the methods described above. One or more embodiments also provide a computer readable storage medium having stored thereon a bitstream generated according to the encoding methods described above. One or more embodiments also provide a computer program product including instructions for performing at least part of any of the methods described above.

BRIEF SUMMARY OF THE DRAWINGS

Figure 1 illustrates a block diagram of an example of a system in which various aspects and embodiments are implemented.

Figure 2 describes an example of a context in which following embodiments can be implemented.

Figure 3 illustrates a block diagram of an example of video encoder.

Figure 4 illustrates a block diagram of an example of video decoder.

Figure 5 illustrates an example of partitioning undergone by an image of an original video sequence.

Figure 6 illustrates a block diagram of an example of video coding system according to embodiments.

Figure 7 illustrates an example process for encoding a bitstream comprising information indicative of energy characteristics of the neural network post-processing filter according to embodiments.

Figure 8A illustrates an example process for decoding a bitstream comprising a NNPFC SEI message carrying information indicative of energy characteristics of the neural network post-processing filter according to embodiments.

Figure 8B illustrates a second example process for decoding a bitstream comprising a NNPFC SEI message carrying information indicative of energy characteristics of the neural network post-processing filter according to embodiments.

Figure 8C illustrates a third example process for decoding a bitstream comprising a NNPFC SEI message carrying information indicative of energy characteristics of the neural network post-processing filter according to embodiments.

DETAILED DESCRIPTION

Various embodiments relate to specific syntax elements that define energy information related to a neural network post-processing filter used in a video coding system. An encoded video bitstream carries such syntax elements from an encoding device to a decoding device, thus allowing the encoding device to specify energy information related to a neural network post-processing filter and allowing the decoding device to make decision with regards to the application of the neural network post-processing filter based on the energy information.

The present aspects, although describing principles in the context of VVC (Versatile Video Coding) or HEVC (High Efficiency Video Coding) specifications, are not limited to these video coding standards, and can be applied, for example, to other standards and recommendations and extensions of any such standards and recommendations (including VVC and HEVC). Unless indicated otherwise, or technically precluded, the aspects described in this application can be used individually or in combination.

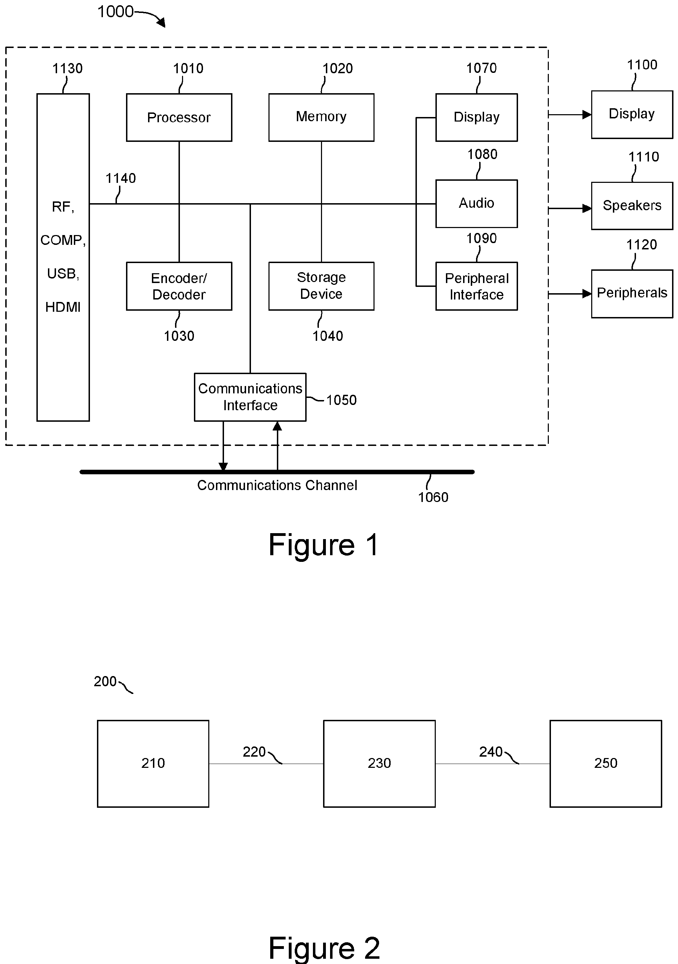

**Figure 1** illustrates a block diagram of an example of a system in which various aspects and embodiments are implemented. System 1000 can be embodied as a device or apparatus including the various components described below and is configured to perform one or more of the aspects described in this document. Examples of such devices include, but are not limited to, various electronic devices such as computers, smartphones, tablets, digital multimedia set top boxes, digital television receivers, personal video recording systems, connected home appliances, vehicle entertainment systems, vehicle control systems, drones, video surveillance cameras, and more generally data servers. Elements of system 1000, singly or in combination, can be embodied in a single integrated circuit (IC), multiple Ics, and/or discrete components. For example, in at least one embodiment, the processing and encoder/decoder elements of system 1000 are distributed across multiple Ics and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash-based memory, magnetic disk drive, solid-state drive (SSD), and/or optical disk drive. The storage device 1040 can include an internal storage device, an attached storage device (including detachable and non-detachable storage devices), and/or a network accessible storage device (a.k.a. cloud storage), as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions described further below. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform one or more of the aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items when performing the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265), or VVC (Versatile Video Coding, also known as H.266).

The input to the elements of system 1000 can be provided through various input devices as indicated in block 1130. Such input devices include, but are not limited to, a radio frequency (RF) portion that receives an RF signal transmitted, for example, over the air by a broadcaster, a Component (COMP) input terminal (or a set of COMP input terminals), a Universal Serial Bus (USB) input terminal, and/or a High-Definition Multimedia Interface (HDMI) input terminal. Other examples include composite video.

In various embodiments, the input devices of block 1130 have associated respective input processing elements as known in the art. For example, the RF portion can be associated with elements suitable for selecting a desired frequency (also referred to as selecting a signal, or band-limiting a signal to a band of frequencies), down converting the selected signal, band-limiting again to a narrower band of frequencies to select (for example) a signal frequency band which can be referred to as a channel in certain embodiments, demodulating the down converted and band-limited signal, performing error correction, and demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna. The RF portion may comply with standard specifications such as those published by Digital Video Broadcasting (DVB), Advanced Television Systems Committee (ATSC), Association of Radio Industries and Businesses (ARIB) or others.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface Ics or within processor 1010 as necessary. The demodulated, error corrected, and demultiplexed stream is provided to various processing elements, including, for example, processor 1010, and encoder/decoder 1030 operating in combination with the memory and storage elements to process the data stream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

**Figure 2** describes an example of a context in which following embodiments can be implemented. In this context 200, a system 210 transmits a video stream to a system 230 using a communication channel 220. Examples of system 210 comprise a camera, a storage device, a computer, a drone, a video surveillance camera, a server or any device capable of delivering a video stream. The video stream is either encoded and transmitted by the system 210 or received and/or stored by the system 210 and then transmitted. The communication channel 220 is a wired (for example Internet, Ethernet, Cable network) or a wireless (for example WiFi, 3G, 4G or 5G, satellite TV, terrestrial TV) network link. The system 230 receives and decodes the video stream to generate a sequence of decoded pictures. An example of system 230 is a set top box. The obtained sequence of decoded pictures is then transmitted to a display system 250 using a communication channel 240, that could be a wired or wireless network as introduced above. The display system 250 then displays said pictures. An example of display system 250 is a television or display monitor.

In an embodiment, the system 230 and the display system 250 are comprised in a single device, thus combining the reception, decoding and display of the video stream. Examples of such device are a television, a computer, a tablet, a smartphone, a head-mounted display, a vehicle entertainment system, a medical device.

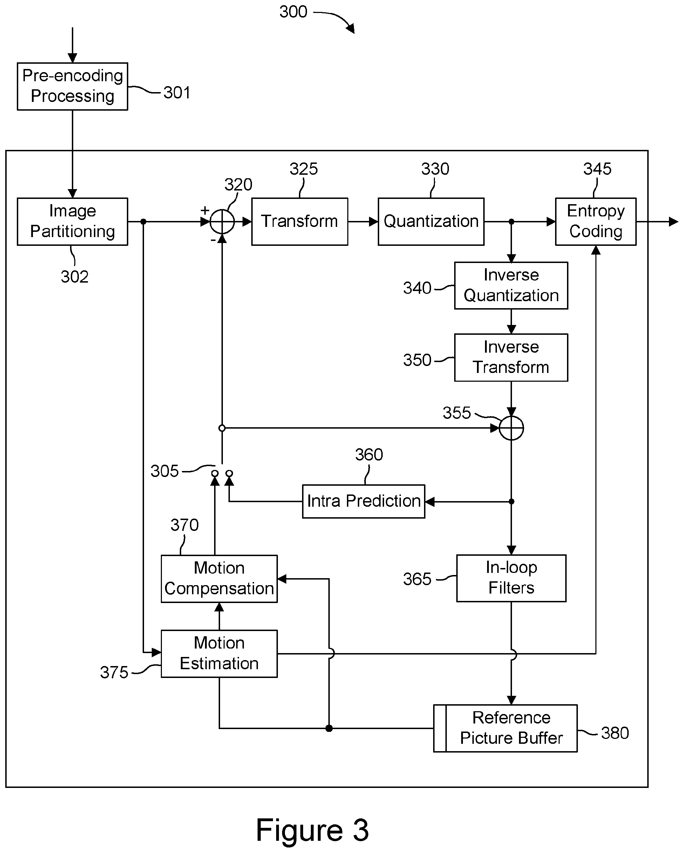

**Figure 3** illustrates a block diagram of an example of video encoder. Variations of this encoder 300 are contemplated, but the encoder 300 is described below for purposes of clarity without describing all expected variations. Before being encoded, the video sequence may go through pre-encoding processing 301, for example, applying a color transform to the input color picture (e.g., conversion from RGB 4:4:4 to YcbCr 4:2:0), or performing a remapping of the input picture components in order to get a signal distribution more resilient to compression (for instance using a histogram equalization of one of the color components). Metadata can be associated with the pre-processing and attached to the bitstream, for example in the form of supplemental enhancement information (SEI) messages, for the standards that include such mechanism.

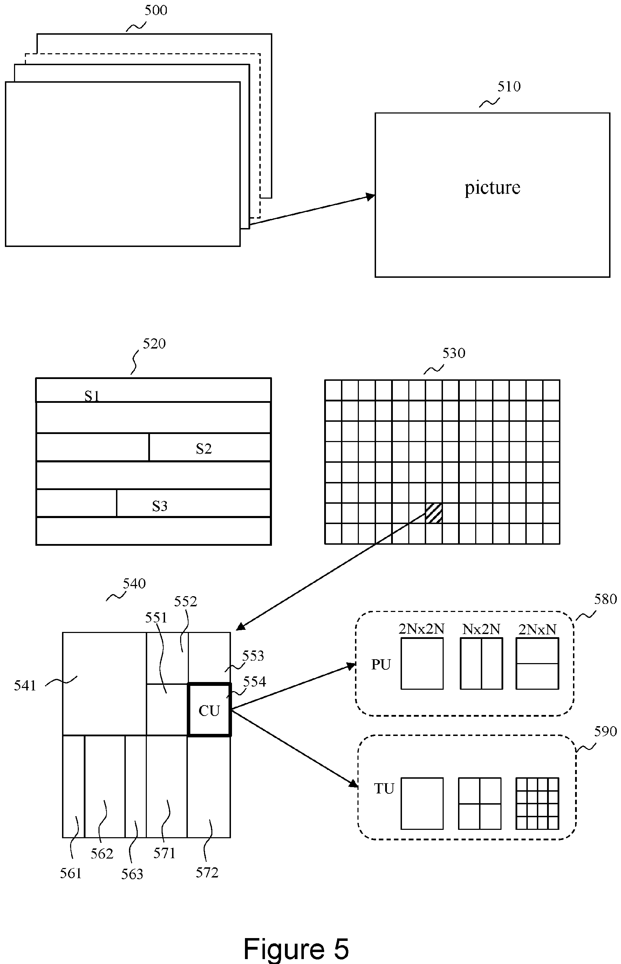

In the encoder, a picture is encoded by the encoder elements as described below. The picture to be encoded is partitioned (302), for example as further described in figure 5, and processed in units such as coding units. Each unit is encoded using, for example, either an intra or inter mode. When a unit is encoded in an intra mode, it performs intra prediction (360). In an inter mode, motion estimation (375) and compensation (370) are performed. The encoder decides (305) which one of the intra mode or inter mode to use for encoding the unit, and indicates the intra/inter decision by, for example, a prediction mode flag. Prediction residuals are calculated, for example, by subtracting (320) the predicted block from the original image block. The prediction residuals are then transformed (325) and quantized (330). The quantized transform coefficients, as well as motion vectors and other syntax elements, are entropy coded (345) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (340) and inverse transformed (350) to decode prediction residuals. Combining (355) the decoded prediction residuals and the predicted block, an image block is reconstructed. In-loop filters (365) are applied to the reconstructed picture to perform, for example, deblocking/SAO (Sample Adaptive Offset), Adaptive Loop-Filter (ALF) filtering to reduce encoding artifacts. The filtered image is stored at a reference picture buffer (380) for further use.

The encoder also generally performs video decoding as part of encoding video data.

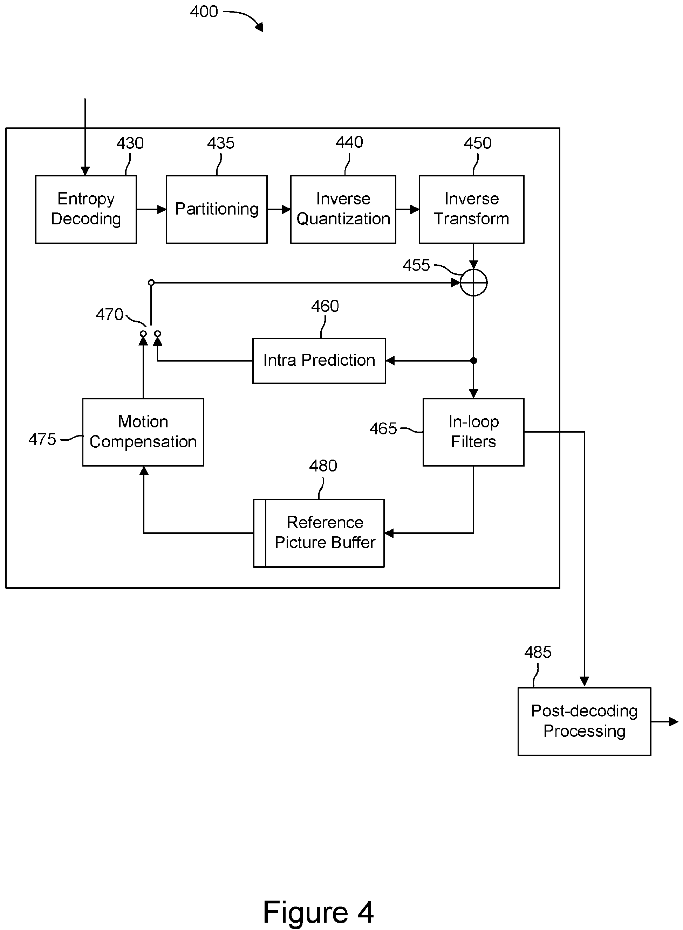

**Figure 4** illustrates a block diagram of an example of video decoder. In the decoder 400, a bitstream is decoded by the decoder elements as described below. Video decoder 400 generally performs a decoding pass reciprocal to the encoding pass as described in previous figure. The input of the decoder includes a video bitstream, which can be generated by video encoder 300 of figure 3. The bitstream is first entropy decoded (430) to obtain transform coefficients, motion vectors, and other coded information. The picture partition information indicates how the picture is partitioned. The decoder may therefore divide (435) the picture according to the decoded picture partitioning information. The transform coefficients are de-quantized (440) and inverse transformed (450) to decode the prediction residuals. Combining (455) the decoded prediction residuals and the predicted block, an image block is reconstructed. The predicted block can be obtained (470) from intra prediction (460) or motion-compensated prediction (i.e., inter prediction) (475). In-loop filters (465) are applied to the reconstructed image. The filtered image is stored at a reference picture buffer (480).

The decoded picture can further go through post-decoding processing (485), for example, an inverse color transform (e.g., conversion from YCbCr 4:2:0 to RGB 4:4:4) or an inverse remapping performing the inverse of the remapping process performed in the pre-encoding processing (301 of figure 3). The post-decoding processing can use metadata derived in the pre-encoding processing and signaled in the bitstream. The post-processing may also comprise neural network post-processing filters designed for different purposes, as described below.

**Figure 5** illustrates an example of partitioning undergone by an image of an original video sequence. An original video sequence 500 comprises a plurality of pictures 510. A picture comprises a plurality of pixels, generally arranged in a grid comprising rows and columns. It is considered in this document that a pixel is composed of three components: a luminance component and two chrominance components. Other types of pixels are however possible comprising less or more components such as only a luminance component or an additional depth component or an additional transparency component.

A picture is divided into a plurality of coding entities. First, as represented by reference 530, a picture is divided in a grid of blocks called coding tree units (CTU). A CTU consists of a block of luminance samples together with two corresponding blocks of chrominance samples. The size of such block is generally N×N, and N is generally a power of two having a maximum value of "128" for example. Second, a picture is divided into one or more groups of CTU. For example, it can be divided into one or more tile rows and tile columns, a tile being a sequence of CTU covering a rectangular region of a picture. In some cases, a tile could be divided into one or more bricks, each of which consisting of at least one row of CTU within the tile. Above the concept of tiles and bricks, another encoding entity, called slice, exists, that can contain at least one tile of a picture or at least one brick of a tile. In the example represented by reference 520, the picture 510 is divided into three slices S1, S2 and S3 of the raster-scan slice mode, each comprising a plurality of tiles (not represented), each tile comprising only one brick.

As represented by reference 540, a CTU may be partitioned into the form of a hierarchical tree of one or more sub-blocks called coding units (CU). The CTU is the root (i.e., the parent node) of the hierarchical tree and can be partitioned in a plurality of CU (i.e., child nodes). Each CU becomes a leaf of the hierarchical tree if it is not further partitioned in smaller CU or becomes a parent node of smaller CU (i.e., child nodes) if it is further partitioned. During the coding of a picture, the partitioning is adaptive, each CTU being partitioned to Optimize a compression efficiency.

For example, the CTU 540 is first partitioned in four square CU using a quadtree type partitioning. The upper left CU 541 is a leaf of the hierarchical tree since it is not further partitioned, i.e., it is not a parent node of any other CU. The upper right CU is further partitioned in four smaller square CU 551, 552, 553, 554 using again a quadtree type partitioning. The bottom left CU is vertically partitioned in three rectangular CU 561, 562, 563 using a ternary tree type partitioning. The bottom right CU is vertically partitioned in two rectangular CU 571, 572 using a binary tree type partitioning.

In HEVC appeared the concept of prediction unit (PU) and transform unit (TU). Indeed, in HEVC, the coding entity that is used for prediction (i.e., a PU) and transform (i.e., a TU) can be a subdivision of a CU. For example, as represented in the figure, a CU of size $2N \times 2N$, can be divided in PU 580 of size $N \times 2N$ or of size $2N \times N$. In addition, said CU can be divided in four TU 590 of size $N \times N$ or in "16" TU of size $(N/2) \times (N/2)$. Other video coding standards also use these notions. In WC, except in some particular cases, frontiers of the TU and PU are aligned on the frontiers of the CU. Consequently, a CU comprises generally one TU and one PU.

In the present application, the terms "reconstructed" and "decoded" may be used interchangeably, the terms "pixel" and "sample" may be used interchangeably, the terms "image," "picture", "sub-picture", "slice" and "frame" may be used interchangeably. Usually, but not necessarily, the term "reconstructed" is used at the encoder side while "decoded" is used at the decoder side. In the present application, the term "block" or "picture block" can be used to refer to any one of a CTU, a CU, a PU and a TU. In addition, the term "block" or "picture block" can be used to refer to a macroblock, a partition and a sub-block as specified in H.264/AVC or in other video coding standards, and more generally to refer to an array of samples of numerous sizes.

Video coding standards like AVC, HEVC and VVC enable embedding of metadata in video bitstreams through Supplemental Enhancement information (SEI) messages. Those messages are defined either in the core standard or companion standard like Versatile Supplemental Enhancement Information(VSEI), and more get added in successive versions of these standards.

A SEI message is a syntax structure that is defined in various MPEG standards to allow carriage of metadata. It is a specific type of Network Access Layer (NAL) unit, which is the elementary packet in MPEG bitstream formats. The SEI syntax may vary slightly across different standards, but it commonly contains at least a payload type, a payload length, and the payload itself. The SEI syntax defined for VVC is illustrated in Table 1 as an example.

Table 1

| sei_message( ) { | Descriptor |
|---|---|
| payloadType = 0 | |
| do { | |
| payload_type_byte | u(8) |
| payloadType += payload_type_byte | |
| } while( payload_type_byte = = 0xFF ) | |
| payloadSize = 0 | |
| do { | |
| payload _size_byte | u(8) |
| payloadSize += payload_size_byte | |
| } while( payload_size_byte = = 0xFF ) | |
| sei_payload( payloadType, payloadSize ) | |
| } | |

In addition, a specific syntax structure is typically defined for each payload type and instantiated by a sei_payload syntax structure according to each payload type. For example, a specific SEI message related to Neural-Network Post-Filter Characteristics (NNPFC-SEI) specifies that a neural network may be used as a post-processing filter. The terms Neural-Network Post-processing Filter (or post filter) is hereafter abbreviated as NNPF. The NNPFC-SEI provides some parameters of such neural network, therefore allowing an encoder to define a neural network for performing a post-processing operation after the decoding operation. The syntax of such NNPFC-SEI message, as disclosed in ISO/IEC DIS 23002-7, is illustrated in Table 2.

Table 2

| nn_post_filter_characteristics( payloadSize ) { | Descriptor |
|---|---|
| nnpfc_purpose | u(16) |
| nnpfc_id | ue(v) |
| nnpfc_base_flag | u(1) |
| nnpfc_mode_idc | ue(v) |
| if( nnpfc_mode_idc = = 1) { | |
| while( !byte_aligned( ) ) | |
| nnpfc_alignment_zero_bit a | u(1) |
| nnpfc_tag_uri | st(v) |
| nnpfc_uri | st(v) |
| } | |
| nnpfc_property_present flag | u(1) |
| if( nnpfc_property_present_flag ) { | |
| /* input and output formatting */ | |
| nnpfc_num_input_pics_minus1 | ue(v) |
| if( nnpfc_num_input_pics_minus1 > 0 ) { | |
| for( i = 0; i <= nnpfc_num_input_pics_minus1; i++ ) | |
| nnpfc_input_pic filtering_flag[ i ] | u(1) |
| nnpfc_absent_input_pic_zero_flag | u(1) |
| } | |
| if( ChromaUpsamplingFlag ) | |
| nnpfc_out_sub_c_flag | u(1) |
| if( ColourizationFlag ) | |
| nnpfc_out_colour_format_idc | u(2) |
| if( ResolutionResamplingFlag ) { | |
| nnpfc_pic_width_num_minus1 | ue(v) |
| nnpfc_pic_width_denom_minus1 | ue(v) |
| nnpfc_pic_height_num_minus1 | ue(v) |
| nnpfc_pic_height_denom_minus1 | ue(v) |
| } | |
| if( PictureRateUpsamplingFlag ) | |
| for( i = 0; i < nnpfc_num_input_pics_minus1; i++ ) | |
| nnpfc_interpolated_pics[ i ] | ue(v) |
| if( TemporalExtrapolationFlag ) | |
| nnpfc_extrapolated_pics_minus1 | ue(v) |

(continued)

| | |
|---|---|
| if( SpatialExtrapolationFlag ) { | |
| nnpfc_spatial_extrapolation_left_offset | ue(v) |
| nnpfc_spatial_extrapolation_right_offset | ue(v) |
| nnpfc_spatial_extrapolation_top_offset | ue(v) |
| nnpfc_spatial_extrapolation_bottom_offset | ue(v) |
| } | |
| nnpfc_component_last_flag | u(1) |
| nnpfc_inp format_idc | ue(v) |
| nnpfc_auxiliary_inp_idc | ue(v) |
| nnpfc_inp_order_idc | ue(v) |
| if( nnpfc_inp_format_idc = = 1 ) { | |
| if( nnpfc_inp_order_idc != 1) | |
| nnpfc_inp_tensor_luma_bitdepth_minus8 | ue(v) |
| if( nnpfc_inp_order_idc > 0 ) | |
| nnpfc_inp_tensor_chroma_bitdepth_minus8 | ue(v) |
| } | |
| nnpfc_out_format_idc | ue(v) |
| nnpfc_out_order_idc | ue(v) |
| if( nnpfc_out_format_idc = = 1) { | |
| if( nnpfc_out_order_idc != 1) | |
| nnpfc_out_tensor_luma_bitdepth_minus8 | ue(v) |
| if( nnpfc_out_order_idc != 0 ) | |
| nnpfc_out_tensor_chroma_bitdepth_minus8 | ue(v) |
| } | |
| nnpfc_separate_colour_description_present_flag | u(1) |
| if( nnpfc_separate_colour_description_present_flag ) { | |
| nnpfc_colour_primaries | u(8) |
| nnpfc_transfer_characteristics | u(8) |
| if( nnpfc_out_format_idc = = 1) { | |
| nnpfc_matrix coeffs | u(8) |
| nnpfc_full_range_flag | u(1) |
| } | |
| } | |
| if( nnpfc_out_order_idc > 0 ) | |
| nnpfc chroma_loc_info_present flag | u(1) |
| if( nnpfc_chroma_loc_info_present_flag ) | |
| nnpfc_chroma_sample_loc_type_frame | ue(v) |
| nnpfc_overlap | ue(v) |
| nnpfc_constant_patch_size_flag | u(1) |
| if( nnpfc_constant_patch_size_flag ) { | |

(continued)

| | |
|---|---|
| npfc_patch_width_minus1 | ue(v) |
| nnpfc_patch_height_minusl | ue(v) |
| } else { | |
| nnpfc_extended_patch_width_cd_delta_minus1 | ue(v) |
| nnpfc_extended_patch_height_cd_delta_minus1 | ue(v) |
| } | |
| nnpfc_padding type | ue(v) |
| if( nnpfc_padding_type = = 4 ) { | |
| if( nnpfc_inp_order_idc != 1 ) | |
| nnpfc_luma_padding val | ue(v) |
| if( nnpfc_inp_order_idc != 0) { | |
| nnpfc_cb_padding_val | ue(v) |
| nnpfc cr_padding val | ue(v) |
| } | |
| } | |
| nnpfc_complexity_info_present_flag | u(1) |
| if( nnpfc_complexity_info_present_flag ) { | |
| nnpfc_parameter_type_idc | u(2) |
| if( nnpfc_parameter_type_idc != 2 ) | |
| nnpfc_log2_parameter_bit_length_minus3 | u(2) |
| nnpfc_num_parameters_idc | u(6) |
| nnpfc_num_kmac_operations_idc | ue(v) |
| nnpfc_total_kilobyte_size | ue(v) |
| } | |
| nnpfc_num_metadata_extension_bits | ue(v) |
| if( nnpfc_num_metadata_extension_bits > 0 ) { | |
| if( nnpfc_purpose = = 0 ) { | |
| nnpfc application_purpose_tag_uri_present_flag | u(1) |
| if( nnpfc_application_purpose_tag_uri_present_flag ) | |
| nnpfc_application_purpose_tag_uri | st(v) |
| } | |
| if( SpatialExtrapolationFlag ) | |
| nnpfc_scan_type_idc | u(2) |
| nnpfc_reserved_metadata_extension | u(v) |
| } | |
| } | |
| /* ISO/IEC 15938-17 bitstream */ | |
| if( nnpfc_mode_idc = = 0) { | |
| while( !byte_aligned( ) ) | |
| nnpfc_alignment_zero_bit_b | u(1) |

(continued)

| | |
|---|---|
| for( i = 0; more_data_in_payload( ); i++ ) | |
| nnpfc_payload_byte[ i ] | b(8) |
| } | |
| } | |

A NNPFC-SEI message indicates the intended purpose of the NNPF, specifies the input and output of the neural network and describes its complexity. Up to now, 8 modes have been defined: enhancing visual quality, changing spatial resolution (e.g., up-sampling from high-definition decoded video to ultra-high definition), changing picture rate (e.g., up-sampling from 30 Hz to 60 Hz), up-sampling bit depth to increase the dynamic range of pixel values, colorization to convert monochrome video to full colors, temporal extrapolation or spatial extrapolation. The SEI syntax defined in ISO/IEC DIS 23002-7 allows to define the purpose of a NNPF by using a flag hereafter named nnpfc_purpose as illustrated in Table 3, where (nnpfc_purpose & bitMask) not equal to 0 indicates that the NNPF has the purpose associated with the bitMask value. When nnpfc_purpose is greater than 0 and (nnpfc_purpose & bitMask) is equal to 0, the purpose associated with the bitMask value is not applicable to the NNPF. When nnpfc_purpose is equal to 0x00, the NNPF may be used as determined by the application and as specified by the nnpfc_application_purpose_tag_uri. For instance, if the nnpfc_purpose is equal to 0x0C (0b0001100), it means that we want to activate a resolution resampling NNPF and a picture rate upsampling NNPF.

Table 3

| bitMask | Interpretation |
|---|---|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |
| 0x40 | Temporal extrapolation (i.e., generating one or more future pictures) |
| 0X80 | Spatial extrapolation (i.e., generating content outside of the spatial area of the input pictures) |

The value of nnpfc_purpose shall be in the range of 0 to 255, inclusive, in bitstreams conforming to this edition of this document. Values of 256 to 65 535, inclusive, for nnpfc_purpose are reserved for future use by ITU-T | ISO/IEC and shall not be present in bitstreams conforming to this edition of this document. Decoders conforming to this edition of this document shall ignore NNPFC SEI messages with nnpfc_purpose in the range of 256 to 65 535, inclusive.

This bitfield is used to derive corresponding variables for the purpose flags shown in table 3. The variables ChromaUpsamplingFlag, ResolutionResamplingFlag, PictureRateUpsamplingFlag, BitDepthUpsamplingFlag, ColourizationFlag, TemporalExtrapolationFlag, and SpatialExtrapolationFlag specifying whether nnpfc_purpose indicates the purpose of the NNPF to include chroma upsampling, resolution resampling, picture rate upsampling, bit depth upsampling, colourization mode, temporal extrapolation, and spatial extrapolation respectively, are derived from the nnpfc_purpose bitfield as follows:

$$\text{ChromaUpsamplingFlag} = ( ( \text{nnpfc\_purpose} \ \& \ 0x02 ) > 0 ) \ ? \ 1 : 0$$

$$\text{ResolutionResamplingFlag} = ( ( \text{nnpfc\_purpose} \ \& \ 0x04 ) > 0 ) \ ? \ 1 : 0$$

$$\text{PictureRateUpsamplingFlag} = ( ( \text{nnpfc\_purpose} \ \& \ 0x08 ) > 0 ) \ ? \ 1 : 0$$

$$BitDepthUpsamplingFlag = ( ( nnpfc\_purpose \ \& \ 0x10 ) > 0 ) ? 1 : 0$$

$$ColourizationFlag = ( ( nnpfc\_purpose \ \& \ 0x20 ) > 0 ) ? 1 : 0$$

$$TemporalExtrapolationFlag = ( ( nnpfc\_purpose \ \& \ 0x40 ) > 0 ) ? 1 : 0$$

$$SpatialExtrapolationFlag = ( ( nnpfc\_purpose \ \& \ 0x80 ) > 0 ) ? 1 : 0$$

The use of a NNPFC-SEI message provides backward compatibility. Indeed, by implementing neural-network filters as a post-processing step and signaling them in a SEI message, their utilization can be introduced to neural network capable devices and services without negatively impacting older systems that lack the ability to execute neural networks.

Embodiments described hereafter have been designed with the foregoing in mind and extend the syntax of NNPFC-SEI messages to include information indicative of energy characteristics of the neural network post-processing filter. The energy characteristics may describe the energy required to run a NNPF or the energy savings (or costs) as a consequence of running a NNPF or the final energy balance induced by the use of the NNPF (thus combining the two first characteristics). Therefore, a system compliant with such messages will be able to make an informed choice on whether a NNPF should be used or not, in other words, the decoder will be able to handle its energy consumption when decoding images.

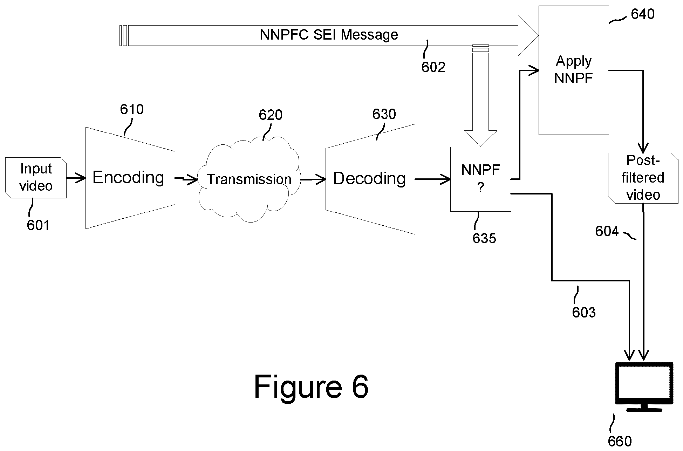

**Figure 6** illustrates a block diagram of an example of video coding system according to embodiments. In step 610, the input video (601) is encoded. An accompanying NNPFC SEI message (602) comprising information indicative of the energy consumption and/or energy saving related to the use of a NNPF, for example according to the syntax described in the tables below, is encoded. In step 620, the encoded video and the NNPFC SEI message are provided to the decoder and conventional video decoding is performed in step 630 to obtain the decoded video (603). The NNPFC SEI message is analyzed. Based on this analysis, the decoder may apply one or more neural network post-processing filter on the decoded video to determine a post-filtered (modified) video (604). Depending on this choice, the video displayed in step 640 is either the decoded (unmodified) video (603) or the post-filtered (modified) video (604).

Applying a neural network needs a certain non-neglectable amount of energy. In some case, it also impacts the energy needed to display the modified video compared to displaying the original decoded video, or the energy needed for subsequent processes (e.g., other post filters). Thanks to the NNPFC SEI message (602) carrying information indicative of energy characteristics of the neural network post-processing filter, the decoder is able to decide whether to apply a neural network post filter at the decoder. This decision, in step 635, is based on the energy that it required to be run and on the potentially saved or consumed energy consequently to the modification applied to the content. The choice of running or not a NNPF may also be done according to criteria related to the device itself. For example, if the decoder is a mobile device and it is considered that not enough energy is available, the application of the neural network does not take place. The information indicative of energy characteristics of a NNPF may also help take decisions between one post filter or another, or one post filter and another processing, based on the energy needed. Local settings of the device or user preferences may also impact this decision. For example, if the user selected his device to be environmentally friendly and to consume as less as possible or less than a predefined threshold, the application of the neural network does not take place, or it can decide to prioritize post filters which consume less. In a more flexible approach, some information based on the energy characteristics of a NNPF may be provided to the user, allowing him/her to be aware of the energy needed by applying some post filtering, and making him/her decide not to apply the NNPF.

These choices may be based not only on the energy that it requires to be run, but also on the energy that can be either saved or lost by using the content on which the post filter has been applied.

Currently, the NNPFC SEI message comprises some information about the complexity of applying a given NNPFC in terms of number of parameters, size of needed memory and number of MAC (multiplication - accumulation operations). However, these numbers, although somehow related to the energy, are not sufficient to give a clear view of the final consumption of running one NNPF or another. Furthermore, they provide an information on what is needed but not a differentiable information on how the energy consumption will subsequently increase while and after running a given neural network post filter.

A first embodiment proposes to add an information indicating the increase of energy amount needed to run a selected neural network post filter. In a second embodiment the saved/lost energy consequently to the application of the post filter is indicated. In a third embodiment, the total energy balance by adding the energy needed to run the post filter and the saved/lost energy consequently to the application of the post filter is indicated.

Table 4 illustrates the first embodiment where an energy parameter related to a neural network post-processing filter indicating the increase of energy amount needed to run a selected neural network post filter is added to the complexity information of the neural network post filter characteristics SEI message. This parameter is identified by the **nnpfc_required_energy_ratio** syntax element and carried within the section triggered by the **nnpfc_complexity_info_present_flag.** It is highlighted by a bold font in table 4 and can take different forms. In the example embodiment of table 4, it is coded using an 8 bit value.

Table 4

| nn_post_filter_characteristics( payloadSize ) { | Descriptor |
|---|---|
| nnpfc_purpose | u(16) |
| nnpfc_id | ue(v) |
| nnpfc_base_flag | u(1) |
| nnpfc_mode_idc | ue(v) |
| if( nnpfc_mode_idc = = 1) { | |
| while( !byte_aligned( ) ) | |
| nnpfc alignment zero_bit a | u(1) |
| nnpfc_tag_uri | st(v) |
| nnpfc_uri | st(v) |
| } | |
| nnpfc_property_present flag | u(1) |
| if( nnpfc_property_present_flag ) { | |
| /* input and output formatting */ | |
| nnpfc_num_input_pics_minus1 | ue(v) |
| if( nnpfc_num_input_pics_minus1 > 0 ) { | |
| for( i = 0; i <= nnpfc_num_input_pics_minus1; i++ ) | |
| nnpfc_input_pic_filtering_flag[ i ] | u(1) |
| nnpfc_absent_input_pic_zero_flag | u(1) |
| } | |
| if( ChromaUpsamplingFlag ) | |
| nnpfc_out_sub_c_flag | u(1) |
| if( ColourizationFlag ) | |
| nnpfc_out_colour_format_idc | u(2) |
| if( ResolutionResamplingFlag ) { | |
| nnpfc_pic_width_num_minus1 | ue(v) |
| nnpfc_pic_width_denom_minus1 | ue(v) |
| nnpfc_pic_height_num_minus1 | ue(v) |
| nnpfc_pic_height_denom_minus1 | ue(v) |
| } | |
| if( PictureRateUpsamplingFlag ) | |
| for( i = 0; i < nnpfc_num_input_pics_minus1; i++ ) | |
| nnpfc_interpolated_pics[ i ] | ue(v) |
| if( TemporalExtrapolationFlag ) | |
| nnpfc_extrapolated_pics_minus1 | ue(v) |
| if( SpatialExtrapolationFlag ) { | |
| nnpfc_spatial_extrapolation_left_offset | ue(v) |

(continued)

| | |
|---|---|
| nnpfc_spatial_extrapolation_right_offset | ue(v) |
| nnpfc_spatial_extrapolation_top_offset | ue(v) |
| nnpfc_spatial_extrapolation_bottom_offset | ue(v) |
| } | |
| nnpfc_component_last flag | u(1) |
| nnpfc_inp_format_idc | ue(v) |
| nnpfc_auxiliary_inp_idc | ue(v) |
| nnpfc_inp order_idc | ue(v) |
| if( nnpfc_inp_format_idc = = 1 ) { | |
| if( nnpfc_inp_order_idc != 1) | |
| nnpfc_inp_tensor_luma_bitdepth_minus8 | ue(v) |
| if( nnpfc_inp_order_idc > 0 ) | |
| nnpfc_inp_tensor_chroma_bitdepth_minus8 | ue(v) |
| } | |
| nnpfc_out_format_idc | ue(v) |
| nnpfc_out_order_idc | ue(v) |
| if( nnpfc_out_format_idc = = 1) { | |
| if( nnpfc_out_order_idc != 1) | |
| nnpfc_out_tensor_luma_bitdepth_minus8 | ue(v) |
| if( nnpfc_out_order_idc != 0 ) | |
| nnpfc_out_tensor_chroma_bitdepth_minus8 | ue(v) |
| } | |
| nnpfc_separate_colour_description_present_flag | u(1) |
| if( nnpfc_separate_colour_description_present_flag ) { | |
| nnpfc_colour_primaries | u(8) |
| nnpfc_transfer_characteristics | u(8) |
| if( nnpfc_out_format_idc = = 1) { | |
| nnpfc_matrix_coeffs | u(8) |
| nnpfc_full_range_flag | u(1) |
| } | |
| } | |
| if( nnpfc_out_order_idc > 0 ) | |
| nnpfc chroma_loc_info_present_flag | u(1) |
| if( nnpfc_chroma_loc_info_present_flag ) | |
| nnpfc_chroma_sample_loc_type_frame | ue(v) |
| nnpfc_overlap | ue(v) |
| nnpfc_constant_patch_size_flag | u(1) |
| if( nnpfc_constant_patch_size_flag ) { | |
| nnpfc_patch_width_minus1 | ue(v) |
| nnpfc_patch_height_minusl | ue(v) |

(continued)

| | |
|---|---|
| } else { | |
| nnpfc_extended_patch_width_cd_delta_minus1 | ue(v) |
| nnpfc_extended_patch_height_cd_delta_minus1 | ue(v) |
| } | |
| nnpfc_padding_type | ue(v) |
| if( nnpfc_padding_type = = 4 ) { | |
| if( nnpfc_inp_order_idc != 1 ) | |
| nnpfc_luma_padding_val | ue(v) |
| if( nnpfc_inp_order_idc != 0) { | |
| nnpfc_cb_padding_val | ue(v) |
| nnpfc_cr_padding_val | ue(v) |
| } | |
| } | |
| nnpfc_complexity_info_present_flag | u(1) |
| if( nnpfc_complexity_info_present_flag ) { | |
| nnpfc_parameter_type_idc | u(2) |
| if( nnpfc_parameter_type_idc != 2 ) | |
| nnpfc_log2_parameter_bit_length_minus3 | u(2) |
| nnpfc_num_parameters_idc | u(6) |
| nnpfc_num_kmac_operations_idc | ue(v) |
| nnpfc_total_kilobyte_size | ue(v) |
| **nnpfc_required_energy_ratio** | **u(8)** |
| } | |
| nnpfc_num_metadata_extension_bits | ue(v) |
| if( nnpfc_num_metadata_extension_bits > 0 ) { | |
| if( nnpfc_purpose = = 0 ) { | |
| nnpfc_application_purpose tag_uri_present flag | u(1) |
| if( nnpfc_application_purpose_tag_uri_present_flag ) | |
| nnpfc_application_purpose tag_uri | st(v) |
| } | |
| if( SpatialExtrapolationFlag ) | |
| nnpfc_scan_type_idc | u(2) |
| nnpfc_reserved_metadata_extension | u(v) |
| } | |
| } | |
| /* ISO/IEC 15938-17 bitstream */ | |
| if( nnpfc_mode_idc = = 0) { | |
| while( !byte_aligned( ) ) | |
| nnpfc_alignment_zero_bit_b | u(1) |
| for( i = 0; more_data_in_payload( ); i++ ) | |

(continued)

| nnpfc_payload_byte[ i ] | b(8) |
|---|---|
| } | |
| } | |

The value of the **nnpfc_required_energy_ratio** syntax element specifies the increase amount of energy required to apply the post-filter. This value may be an absolute energy value. It may also be computed with reference to the overall amount of energy required by the tool in charge of running the NNPF (e.g., the decoder), thus allowing to compare one or more NNPF to the overall decoding functions. It may also be compared with reference to a bigger system such as the device itself.

In at least one variant of the first embodiment, the **nnpfc_required_energy_ratio** syntax element is coded over 2 bits to select among a pre-determined set of percentage values, as illustrated in Table 5. In such embodiment, for example, **nnpfc_required_energy_ratio** equals to 2 represents an energy reduction rate of 20%.

Table 5

| nnpfc_required_energy_ratio | Interpretation |
|---|---|
| 0 | The required energy ratio is 5% |
| 1 | The required energy ratio is 10% |
| 2 | The required energy ratio is 20% |
| 3 | The required energy ratio is 30% |

In at least one variant of the first embodiment, the value of the **nnpfc_required_energy_ratio** syntax element is expressed as a percentage of energy, when compared to the energy needed without the post filter. Its value is between 0 and 100 and may be coded over 7 bits. It may also be coded as a float value to allow for decimal values of percentage.

In at least one variant of the first embodiment, the value of the **nnpfc_required_energy_ratio** syntax element is expressed as a percentage of energy, when compared to the energy needed without the post filter and coded using an 8-bit value as follows:

$$\left\lfloor \frac{100}{2^8 - 1} \times \textbf{nnpfc\_required\_energy\_ratio} \right\rfloor$$

In at least one variant of the above embodiment, the range of acceptable percentage of energy needed by NNPFs can be a priori restricted. For example it could be restricted to the range [0%, 10%] or to the range [0%, 30%] or to any other range. In this case, the value of **nnpfc_required_energy_ratio** can still be coded over 7 bits, with a normalization by 10 (in the first example of range) to retrieve the actual percentages. Another range of percentage values can be envisioned with a corresponding normalization from the coded values in the **nnpfc_required_energy_ratio.**

Table 5 illustrates a variant of the first embodiment where an energy parameter related to a neural network post-processing filter indicating the increase of energy amount needed to run a selected neural network post filter is added for each mode (**nnpfc_purpose** syntax element). As introduced above in relation with Table 3, the **nnpfc_purpose** flag corresponds to a list of 8 modes (and their corresponding flags) describing the different tasks that the neural network may implement. In embodiments, each of these tasks may be deactivated independently and the choice of deactivating one or more tasks may be based on some energy consumption criterion. For this reason, the syntax is modified to provide one specific energy flag per mode (i.e., per purpose flag) in the NNPFC syntax.

This parameter is identified respectively by the **nnpfc_required_energy_ratio_for_chroma_upsampling, npfc_required_energy_ratio_for_colourization, nnpfc_required_energy_ratio_for_resolution_upsampling, nn pfc_required_energy_ratio_for_picture_rate_upsampling, nnpfc_required_energy_ratio_for_temporal_extrap olation,** and **nnpfc_required_energy_ratio_for_spatial_extrapolation** syntax elements carried within the section related to the complexity information and triggered by individual purpose flags related to the corresponding modes. These elements are highlighted by a bold font in table 6 and can take different forms. In the example embodiment of table 6, the elements are for example coded using an 8-bit value. The different coding types described above (e.g., pre-determined set of percentage values, value ranging from 0 to 100) may also apply to this variant.

Table 6

| nn_post_filter_characteristics( payloadSize ) { | Descriptor |
|---|---|
| nnpfc_purpose | u(16) |
| nnpfc_id | ue(v) |
| nnpfc_base_flag | u(1) |
| nnpfc_mode_idc | ue(v) |
| if( nnpfc_mode_idc = = 1 ) { | |
| while( !byte_aligned( ) ) | |
| nnpfc_alignment_zero_bit_a | u(1) |
| nnpfc_tag_uri | st(v) |
| nnpfc_uri | st(v) |
| } | |
| nnpfc_property_present_flag | u(1) |
| if( nnpfc_property_present_flag ) { | |
| /* input and output formatting */ | |
| nnpfc_num_input_pics_minus1 | ue(v) |
| if( nnpfc_num_input_pics_minus1 > 0 ) { | |
| for( i = 0; i <= nnpfc_num_input_pics_minus1; i++ ) | |
| nnpfc_input_pic_filtering_flag[ i ] | u(1) |
| nnpfc_absent_input_pic_zero_flag | u(1) |
| } | |
| if( ChromaUpsamplingFlag ) | |
| nnpfc_out_sub_c_flag | u(1) |
| if( ColourizationFlag ) | |
| nnpfc_out_colour_format_idc | u(2) |
| if( ResolutionResamplingFlag ) { | |
| nnpfc_pic_width_num_minus1 | ue(v) |
| nnpfc_pic_width_denom_minus1 | ue(v) |
| nnpfc_pic_height_num_minus1 | ue(v) |
| nnpfc_pic_height_denom_minus1 | ue(v) |
| } | |
| if( PictureRateUpsamplingFlag ) | |
| for( i = 0; i < nnpfc_num_input_pics_minus1; i++ ) | |
| nnpfc_interpolated_pics[ i ] | ue(v) |
| if( TemporalExtrapolationFlag ) | |
| nnpfc_extrapolated_pics_minus1 | ue(v) |
| if( SpatialExtrapolationFlag ) { | |
| nnpfc_spatial_extrapolation_left_offset | ue(v) |
| nnpfc_spatial_extrapolation_right_offset | ue(v) |
| nnpfc_spatial_extrapolation_top_offset | ue(v) |
| nnpfc_spatial_extrapolation_bottom_offset | ue(v) |

| | |
|---|---|
| } | |
| nnpfc_component_last_flag | u(1) |
| nnpfc_inp_format_idc | ue(v) |
| nnpfc_auxiliary_inp_idc | ue(v) |
| nnpfc_inp_order_idc | ue(v) |
| if( nnpfc_inp_format_idc = = 1 ) { | |
| if( nnpfc_inp_order_idc != 1) | |
| nnpfc_inp_tensor_luma_bitdepth_minus8 | ue(v) |
| if( nnpfc_inp_order_idc > 0 ) | |
| nnpfc_inp_tensor_chroma_bitdepth_minus8 | ue(v) |
| } | |
| nnpfc_out_format_idc | ue(v) |
| nnpfc_out_order_idc | ue(v) |
| if( nnpfc_out_format_idc = = 1) { | |
| if( nnpfc_out_order_idc != 1) | |
| npfc_out_tensor_luma_bitdepth_minus8 | ue(v) |
| if( nnpfc_out_order_idc != 0 ) | |
| nnpfc_out_tensor_chroma_bitdepth_minus8 | ue(v) |
| } | |
| nnpfc_separate_colour_description_present_flag | u(1) |
| if( nnpfc_separate_colour_description_present_flag ) { | |
| nnpfc_colour_primaries | u(8) |
| nnpfc_transfer_characteristics | u(8) |
| if( nnpfc_out_format_idc = = 1) { | |
| nnpfc_matrix_coeffs | u(8) |
| nnpfc_full_range_flag | u(1) |
| } | |
| } | |
| if( nnpfc_out_order_idc > 0 ) | |
| nnpfc_chroma_loc_info_present_flag | u(1) |
| if( nnpfc_chroma_loc_info_present_flag ) | |
| nnpfc_chroma_sample_loc_type_frame | ue(v) |
| nnpfc_overlap | ue(v) |
| nnpfc_constant_patch_size_flag | u(1) |
| if( nnpfc_constant_patch_size_flag ) { | |
| nnpfc_patch_width_minus1 | ue(v) |
| nnpfc_patch_height_minus1 | ue(v) |
| } else { | |
| nnpfc_extended_patch_width_cd_delta_minus1 | ue(v) |
| nnpfc_extended_patch_height_cd_delta_minus1 | ue(v) |

(continued)

| | |
|---|---|
| } | |
| nnpfc_padding_type | ue(v) |
| if( nnpfc_padding_type = = 4 ) { | |
|   if( nnpfc_inp_order_idc != 1 ) | |
|     nnpfc_luma_padding val | ue(v) |
|   if( nnpfc_inp_order_idc != 0) { | |
|     nnpfc_cb_padding_val | ue(v) |
|     nnpfc_cr_padding_val | ue(v) |
|   } | |
| } | |
| nnpfc_complexity_info_present_flag | u(1) |
| if( nnpfc_complexity_info_present_flag ) { | |
|   nnpfc_parameter_type_idc | u(2) |
|   if( nnpfc_parameter_type_idc != 2 ) | |
|     nnpfc_log2_parameter_bit_length_minus3 | u(2) |
|   nnpfc_num_parameters_idc | u(6) |
|   nnpfc_num_kmac_operations_idc | ue(v) |
|   nnpfc_total_kilobyte_size | ue(v) |
|   **if( ChromaUpsamplingFlag )** | |
|     **nnpfc_required_energy_ratio_for_chroma_upsampling** | **u(8)** |
|   **if(ColourizationFlag)** | |
|     **nnpfc_required_energy_ratio_for_colourization** | **u(8)** |
|   **if(ResolutionResamplingFlag)** | |
|     **nnpfc_required_energy_ratio_for_resolution_upsampling** | **u(8)** |
|   **if(PictureRateUpsamplingFlag)** | |
|     **nnpfc_required_energy_ratio_for_picture_rate_upsampling** | **u(8)** |
|   **if (TemporalExtrapolationFlag)** | |
|     **nnpfc_required_energy_ratio_for_temporal_extrapolation** | **u(8)** |
|   **if(SpatialExtrapolationFlag)** | |
|     **nnpfc_required_energy_ratio_for_spatial_extrapolation** | **u(8)** |
| **}** | |
| nnpfc_num_metadata_extension_bits | ue(v) |
| if( nnpfc_num_metadata_extension_bits > 0 ) { | |
|   if( nnpfc_purpose = = 0 ) { | |
|     nnpfc_application_purpose_tag_uri_present_flag | u(1) |
|     if( nnpfc_application_purpose_tag_uri_present_flag ) | |
|       nnpfc_application_purpose_tag_uri | st(v) |
|   } | |
|   if( SpatialExtrapolationFlag ) | |
|     nnpfc_scan_type_idc | u(2) |

(continued)

| | |
|---|---|
| nnpfc_reserved_metadata_extension | u(v) |
| } | |
| } | |
| /* ISO/IEC 15938-17 bitstream */ | |
| if( nnpfc_mode_idc = = 0) { | |
| while( !byte_aligned( ) ) | |
| nnpfc alignment zero_bit_b | u(1) |
| for( i = 0; more_data_in_payload( ); i++ ) | |
| nnpfc_payload_byte[ i ] | b(8) |
| } | |
| } | |

In the second embodiment, the energy characteristics carried by the NNPFC SEI message specifies the amount of energy that may be either gained or lost by using the content after the application of the NNPF, in other words, as a consequence of using the NNPF. For example, if the NNPF has for purpose to spatially extrapolate the content, and if other NNPFs are applied after this NNPF, the modification of the content will result in an increase content resolution and thus, might most probably result in an increase consumption of the subsequent NNPFs. Indeed, neural networks' complexity and therefore energy are often related to the input content resolution. Other types of NNPF may result in decreasing the energy consumption.

This energy characteristic does not include the energy needed to apply the NNPF itself.

The amount of energy is carried by a **nnpfc_energy_ratio** syntax element, replacing the **nnpfc_required_energy_ratio** syntax element. Except the change of name, the syntax of Tables 4 and 6 remain unchanged.

In such embodiment, the **nnpfc_energy_ratio** syntax element may be coded as an 8-bit value and the range 0 to 255 should express positive as well as negative values as following: values below 128 should be considered as negative while the values above 128 should be considered as positive. A value equal to 0 corresponds to a lost of energy equal to a maximal loss value (e.g, -30%) and a value equal to 255 corresponds to a gain of energy equal to a maximal gain value (e.g., +30%).

In a variant embodiment, the **nnpfc_energy_ratio** syntax element is selected among a pre-determined set of percentage values that comprises both positive and negative values.

The variants described in the context of the first embodiment also apply for the second embodiment. For example, a specific syntax element may be defined for each mode.

In a variant embodiment, a Boolean flag is added to express a sign, for example identified as **nnpfc_energy_ratio_sign_flag** syntax element that, when false (e.g. equal to 0), indicates a gain (i.e. a positive value) and when true (e.g. equal to 1) indicates a loss (i.e. a negative value). In this case, the **nnpfc_energy_ratio** syntax element represents only positive values.

The Table 7 illustrates such example.

Table 7

| nn_post_filter_characteristics( payloadSize ) { | Descripto r |
|---|---|
| nnpfc_purpose | u(16) |
| nnpfc_id | ue(v) |
| nnpfc_base_flag | u(1) |
| nnpfc_mode_idc | ue(v) |
| if( nnpfc_mode_idc = = 1) { | |
| while( !byte_aligned( ) ) | |
| nnpfc_alignment_zero_bit a | u(1) |
| nnpfc_tag_uri | st(v) |
| nnpfc_uri | st(v) |

(continued)

| | |
|---|---|
| } | |
| nnpfc_property_present_flag | u(1) |
| if( nnpfc_property_present_flag ) { | |
| /* input and output formatting */ | |
| nnpfc_num_input_pics_minus1 | ue(v) |
| if( nnpfc_num_input_pics_minus1 > 0 ) { | |
| for( i = 0; i <= nnpfc_num_input_pics_minus1; i++ ) | |
| nnpfc_input_pic_filtering_flag[ i ] | u(1) |
| nnpfc_absent_input_pic_zero_flag | u(1) |
| } | |
| if( ChromaUpsamplingFlag ) | |
| nnpfc_out_sub_c_flag | u(1) |
| if( ColourizationFlag ) | |
| nnpfc_out_colour_format_idc | u(2) |
| if( ResolutionResamplingFlag ) { | |
| nnpfc_pic_width_num_minus1 | ue(v) |
| nnpfc_pic_width_denom_minus1 | ue(v) |
| nnpfc_pic_height_num_minus1 | ue(v) |
| nnpfc_pic_height_denom_minus1 | ue(v) |
| } | |
| if( PictureRateUpsamplingFlag ) | |
| for( i = 0; i < nnpfc_num_input_pics_minus1; i++ ) | |
| nnpfc_interpolated_pics[ i ] | ue(v) |
| if( TemporalExtrapolationFlag ) | |
| nnpfc_extrapolated_pics_minus1 | ue(v) |
| if( SpatialExtrapolationFlag ) { | |
| nnpfc_spatial_extrapolation_left_offset | ue(v) |
| nnpfc_spatial_extrapolation_right_offset | ue(v) |
| nnpfc_spatial_extrapolation_top_offset | ue(v) |
| nnpfc_spatial_extrapolation_bottom_offset | ue(v) |
| } | |
| nnpfc_component_last_flag | u(1) |
| nnpfc_inp_format_idc | ue(v) |
| nnpfc auxiliary_inp_idc | ue(v) |
| nnpfc_inp order_idc | ue(v) |
| if( nnpfc_inp_format_idc = = 1 ) { | |
| if( nnpfc_inp_order_idc != 1) | |
| nnpfc_inp_tensor_luma_bitdepth_minus8 | ue(v) |
| if( nnpfc_inp_order_idc > 0 ) | |
| nnpfc_inp_tensor_chroma_bitdepth_minus8 | ue(v) |

(continued)

| | |
|---|---|
| } | |
| nnpfc_out_format_idc | ue(v) |
| nnpfc out order_idc | ue(v) |
| if( nnpfc_out_format_idc == 1) { | |
| if( nnpfc_out_order_idc != 1) | |
| nnpfc_out_tensor_luma_bitdepth_minus8 | ue(v) |
| if( nnpfc_out_order_idc != 0 ) | |
| nnpfc_out_tensor_chroma_bitdepth_minus8 | ue(v) |
| } | |
| nnpfc_separate_colour_description_present_flag | u(1) |
| if( nnpfc_separate_colour_description_present_flag ) { | |
| nnpfc_colour_primaries | u(8) |
| nnpfc_transfer_characteristics | u(8) |
| if( nnpfc_out_format_idc == 1 ) { | |
| nnpfc_matrix_coeffs | u(8) |
| nnpfc_full_range_flag | u(1) |
| } | |
| } | |
| if( nnpfc_out_order_idc > 0 ) | |
| nnpfc chroma_loc_info_present_flag | u(1) |
| if( nnpfc_chroma_loc_info_present_flag ) | |
| nnpfc_chroma_sample_loc_type_frame | ue(v) |
| nnpfc_overlap | ue(v) |
| nnpfc_constant_patch_size_flag | u(1) |
| if( nnpfc_constant_patch_size_flag ) { | |
| nnpfc_patch_width_minus1 | ue(v) |
| nnpfc_patch_height_minusl | ue(v) |
| } else { | |
| nnpfc_extended_patch_width_cd_delta_minus1 | ue(v) |
| nnpfc_extended_patch_height_cd_delta_minus1 | ue(v) |
| } | |
| nnpfc_padding_type | ue(v) |
| if( nnpfc_padding_type == 4 ) { | |
| if( nnpfc_inp_order_idc != 1 ) | |
| nnpfc_luma_padding_val | ue(v) |
| if( nnpfc_inp_order_idc != 0) { | |
| nnpfc_cb_padding_val | ue(v) |
| nnpfc cr_padding_val | ue(v) |
| } | |
| } | |

(continued)

| | |
|---|---|
| nnpfc_complexity_info_present_flag | u(1) |
| if( nnpfc_complexity_info_present_flag ) { | |
|   nnpfc_parameter_type_idc | u(2) |
|   if( nnpfc_parameter_type_idc != 2 ) | |
|     nnpfc_log2_parameter_bit_length_minus3 | u(2) |
|   nnpfc_num_parameters_idc | u(6) |
|   nnpfc_num_kmac_operations_idc | ue(v) |
|   nnpfc_total_kilobyte_size | ue(v) |
| **  nnpfc_energy_ratio_sign_flag** | **u(1)** |
| **  nnpfc_energy_ratio** | **u(8)** |
|   } | |
| } | |
|   nnpfc_num_metadata_extension_bits | ue(v) |
|   if( nnpfc_num_metadata_extension_bits > 0 ) { | |
|     if( nnpfc_purpose = = 0 ) { | |
|       nnpfc_application_purpose tag_uri_present_flag | u(1) |
|       if( nnpfc_application_purpose_tag_uri_present_flag ) | |
|         nnpfc_application_purpose_tag_uri | st(v) |
|     } | |
|     if( SpatialExtrapolationFlag ) | |
|       nnpfc_scan_type_idc | u(2) |
|     nnpfc_reserved_metadata_extension | u(v) |
|   } | |
| } | |
| /* ISO/IEC 15938-17 bitstream */ | |
| if( nnpfc_mode_idc = = 0) { | |
|   while( !byte_aligned( ) ) | |
|     nnpfc alignment zero_bit_b | u(1) |
|   for( i = 0; more_data_in_payload( ); i++ ) | |
|     nnpfc_payload_byte[ i ] | b(8) |
|   } | |
| } | |

In the third embodiment, the **nnpfc_energy_ratio** syntax element specifies the absolute balance in terms of energy, considering both the energy consumed by the processor to apply the NNPF and the energy saved or lost while using the content consequently to the application of the NNPF. The example syntax of table 7 also applies to the third embodiment. In this example embodiment, the **nnpfc_energy_ratio** syntax element is for example coded using an 8-bit value. The different coding types described above with respect to the first and second embodiments (e.g., pre-determined set of percentage values, value ranging from 0 to 100) may also apply to this third embodiment.

Similar to first and second embodiments, the **nnpfc_energy_ratio** syntax element may be present in the complexity related information of the NNPF metadata or individual syntax elements may be defined for each purpose, using the same syntax as above. All the variants described above with reference to the first and second embodiments may apply to this third embodiment.

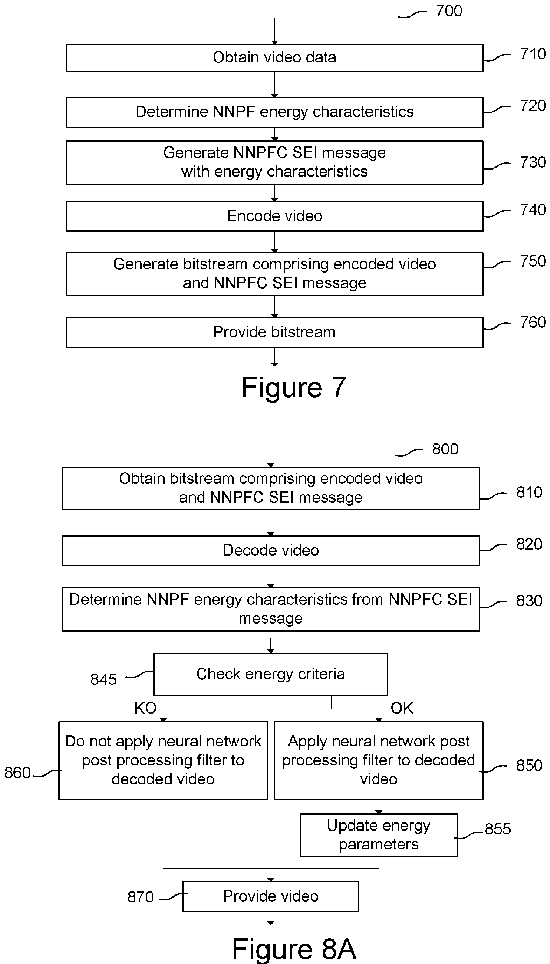

**Figure 7** illustrates an example process for encoding a bitstream comprising information indicative of energy characteristics of the neural network post-processing filter according to embodiments. The process 700 is for example implemented by a processor 1010 of a device 1000 of figure 1, a system 210 of figure 2, or an encoder 300 of figure 3. In step 710, the processor obtains video data. In step 720, the processor determines energy characteristics of the neural network post-processing filter. An example of energy consumption of a neural network could be described by the following equation:

$$EN = (\alpha \times M + \beta) \times S + \Delta$$

Where $E_N$ is the energy consumption in Joule, M is the number of kMAC operations, S is the number of pixels in a frame of the input content and $\alpha$, $\beta$ and $\Delta$ are constants depending on the neural network. Other equations may be used.
In step 730, the processor generates a NNPFC SEI message comprising information indicative of energy characteristics of the neural network post-processing filter, for example based on the syntax of Tables 4, 6 or 7.
In step 740, the processor conventionally encodes the video. In step 750, the processor generates a bitstream that comprises the encoded video data and the NNPFC SEI message comprising information indicative of energy characteristics of the neural network post-processing filter. In step 760, the processor provides the bitstream.
In at least one embodiment, the NNPF is predetermined (i.e., standardized). In at least one embodiment, the NNPF is defined by a URL. In at least one embodiment, the weights of the NNPF model are transmitted in the bitstream (for example using ISO/IEC 15938-17 syntax introduced in table 2). These methods are activated using the nnpfc_mode_id flag and setting the appropriate parameters.
**Figure 8A** illustrates an example process for decoding a bitstream comprising a NNPFC SEI message carrying information indicative of energy characteristics of the neural network post-processing filter according to embodiments. The process 800 is for example implemented by a device 1000 of figure 1, a system 230 of figure 2, or a decoder 400 of figure 4. In step 810, the processor obtains the bitstream that comprises an encoded video data and metadata for neural network post-processing filter packaged into a NNPFC SEI message carrying information indicative of energy characteristics of the neural network post-processing filter, for example based on the syntax of Tables 4, or 6. In step 820, the processor conventionally decodes the video from the encoded video data. In step 830, the processor determines, from the NNPFC SEI message, energy characteristics of the neural network post-processing filter or of the set of purposes (i.e., sub tasks) of the neural network post-processing filter. More particularly, for each of the NNPFC Flags set to 1, thus corresponding to NNPF subtask to activate, the corresponding **nnpfc_required_energy_ratio** metadata are decoded. The figure describes the process for a single purpose. However, if more than one purpose is activated, the steps 845, 850, 855, 860 may be iterated on the plurality of energy related NNPFC flags each related to one purpose. In step 845, the processor checks energy criteria and responsively decides whether the NNPF should be applied or not. Different criteria may be used. One example of criterion is related to remaining available battery. Indeed, in the case of mobile devices, when the battery charge level is too low, applying the NNPF may result in a mobile device that is no longer operational. Therefore, in this case where the battery charge level is too low, the processor skips the application of the NNPF in order to save some energy. As a result of the energy check of step 845, the processor jumps to step 850 or 860 accordingly. In step 860, the processor does not apply the neural network post-processing filter to the decoded video. In step 850, the processor applies the neural network post-processing filter to the decoded video and updates the energy parameters in step 855. This step comprises for example updating the amount of remaining battery according to the impact of a newly selected NNPF. Finally, in step 870, the processor provides the video. In case several purposes are activated, steps 860 and 850 are adapted respectively to activate or deactivate the corresponding purpose of the NNPF, and step 870 is preceded by another step in which the NNPF with the updated purposes is applied or not depending on whether some purposes remain activated.

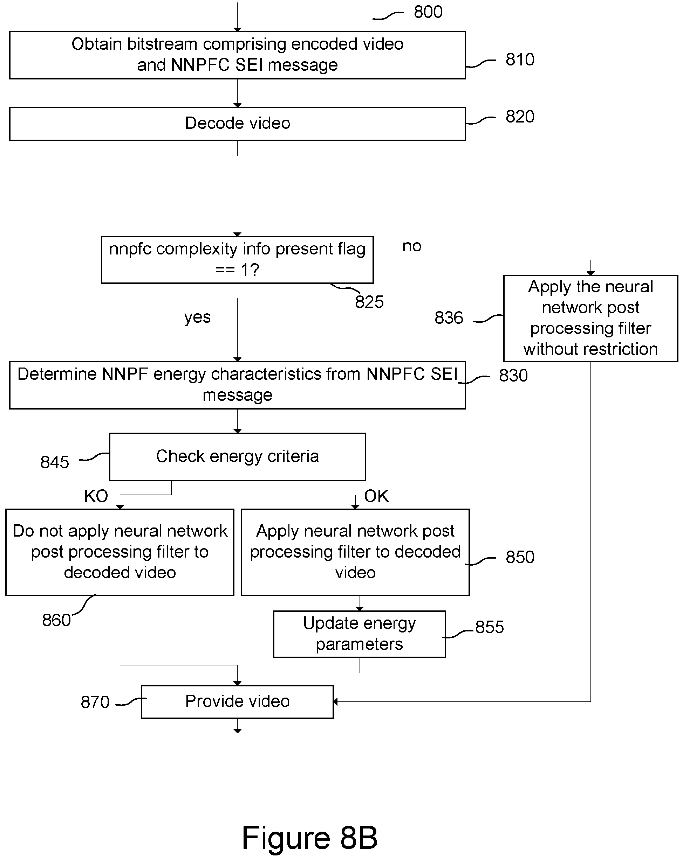

**Figure 8B** illustrates a second example process for decoding a bitstream comprising a NNPFC SEI message carrying information indicative of energy characteristics of the neural network post-processing filter according to embodiments. Figure 8B is very similar to figure 8A and mostly comprises the same steps. An additional step 825 is introduced, in which the processor checks if the **nnpfc_complexity_info_present_flag** is set to 1. This indicates that complexity information related to the NNPF is present. In this case, the process is identical to the process of figure 8A. When the **nnpfc_complexity_info_present_flag** is set to 0, it indicates that no complexity information related to the NNPF is present and therefore the processor cannot get NNPF energy related information from the NNPFC SEI message. In this case, in one embodiment, the processor jumps to step 836 and applies all the NNPF without restriction. In another embodiment, no NNPF is applied in the case where the complexity information is not present. Similarly to Figure 8A, when several purposes are activated, steps 860 and 850 are adapted respectively to activate or deactivate the corresponding purpose of the NNPF, and step 870 is preceded by another step in which the NNPF with the updated purposes is applied or not depending on whether some purposes remain activated.
In another embodiment, the decision to apply the NNPF is also conditioned to the amount of energy needed to process to some other processings or to the amount of energy needed by some other tools at the decoder side.

In another embodiment, when the **nnpfc_required_energy_ratio** syntax element contains a percentage of increase of energy corresponding to the use of the NNPF, an additional step is introduced after decoding this metadata which enables to convert this percentage into an amount of energy that can be compared to the energy criteria such as the remaining state of the battery. For this, the current level of energy drawn from the battery is used to compute the correspondence between the percentage and the actual needed energy.

In another embodiment, when multiple purposes are activated, the decision to activate a NNPF purpose is not done sequentially, but, for each NNPF purpose that should be activated, all energy ratios are decoded and a selection is done between these NNPF purposes according to for example, some level of priority in the processing of some NNPF purposes compared to others, or in order to maximize the number of NNPF purposes that it will be possible to apply (for example, starting by those that require less energy), or according to a combination of the two above examples (priority and energy). The choice of NNPF purposes may also depend on other decision indicators.

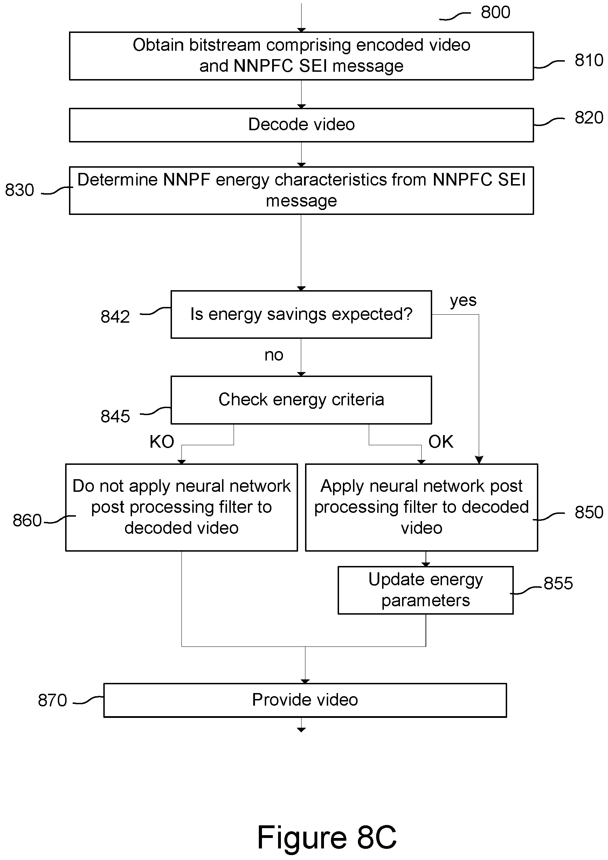

**Figure 8C** illustrates a third example process for decoding a bitstream comprising a NNPFC SEI message carrying information indicative of energy characteristics of the neural network post-processing filter according to the second and third embodiments. Figure 8C is very similar to figure 8A and mostly comprises the same steps, with the addition of a new step 842. This process is related to the syntax defined in Table 7 where a **nnpfc_energy_ratio** syntax element is used to specify the potential gain or loss in terms of energy while using the content on which the NNPF would have been applied. The steps are identical to the corresponding steps as described with respect to figure 8A, with the exception of step 830. Indeed, in this case, the syntax element extracted from the NNPFC SEI message is a **nnpfc_energy_ratio** syntax element that represents the amount of energy that may be gained or lost as a consequence of the use of the NNPF or a balance of energy that would be obtained if the NNPF were applied, and not only an energy cost of applying the NNPF as indicated by the **nnpfc_required_energy_ratio** of figures 8A, 8B. In the additional step 842, it is tested whether the application of the NNPF brings some energy savings. This may be done by testing the **nnpfc_energy_ratio_sign_flag** syntax element when it exists. In this case, a negative sign indicates that an energy saving is expected as result of the application of the filter. In some variants, energy savings are indicated by specific values of the **nnpfc_energy_ratio** syntax element. In case the application of the NNPF brings some energy savings, the processor jumps to step 850 and applies the NNPF, which will result in an absolute gain in energy. A positive sign indicates that no energy saving is expected as result of the application of the filter. In this case, the processor jumps to step 845 and, similar to the figure 8A, checks the energy criteria to decide if the NNPF should be applied. Similarly to Figures 8A and 8B, when several purposes are activated, steps 860 and 850 are adapted respectively to activate or deactivate the corresponding purpose of the NNPF, and step 870 is preceded by another step in which the NNPF with the updated purposes is applied or not depending on whether some purposes remain activated.

In the embodiments and example processes described above, the energy criterion used to determine whether or not to apply the NNPF is described as related to the battery charge level. However, other criteria may be used for this purpose and particularly in the case of devices plugged into the electricity supply network (e.g. a television) that do not consider charge level. However, such devices may also integrate the same mechanisms aiming at controlling their energy consumption. The energy criteria may be based for example on some user profile containing an energy threshold above which the user does not want to go. In this case, one use case could be a user watching a content on a TV screen, and this user having a user profile with a defined maximum energy threshold. If the application of the NNPF results in some energy consumption higher than the threshold, then the filter is not applied. The energy criteria may be based for example on a user setting or device configuration parameter that indicates a level of environmental friendliness. A high level of such parameter would result in no NNPF applied, except when it results on an overall energy saving, as discussed with reference to figure 8C.

In addition, the criteria may be a combination of multiple criteria. For example, a user setting may define a minimal charge level under which the NNPF is not applied.

In at least one embodiment combining the embodiments above, the NNPFC SEI message comprises a first information indicative of energy needed to apply the neural network post-processing filter and a second information indicative of the energy savings (or cost) as a consequence of the application of the neural network post-processing filter. The first information may be based on the **nnpfc_required_energy_ratio** syntax element as defined in the different embodiments described and the second information may be based on the **nnpfc _energy_ratio** syntax element as defined in the second embodiment described above. This would allow the device to make a choice based on more information.

Embodiments introduced above describe an energy parameter related to a neural network post-processing filter taking the form of a **nnpfc_required_energy_ratio** syntax element or a **nnpfc_energy_ratio** syntax element. The labeling of such energy parameters may be different while still corresponding to the principles of the embodiments described herein.

Although some parts of the description refer to video, the embodiments are not restricted to conventional (2D) videos and apply to any type of visual media content such as static images, stereoscopic (3D) images or videos, 360° immersive images or video, point clouds, based on the same principles as described above.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The aspects described and contemplated in this application can be implemented in many different forms. Figures provide some embodiments, but other embodiments are contemplated and the discussion of these figures does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

Various methods are described herein, and each of the methods comprises one or more steps or actions for achieving the described method. Unless a specific order of steps or actions is required for proper operation of the method, the order and/or use of specific steps and/or actions may be modified or combined.

Various numeric values are used in the present application, for example, 128 for the block size. The specific values are for example purposes and the aspects described are not limited to these specific values.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, adapting the illumination compensation process.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

This application describes a variety of aspects, including tools, features, embodiments, models, approaches, etc.

Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, tablets, smartphones, cell phones, portable/personal digital assistants, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

In the present application, the terms "reconstructed" and "decoded" may be used interchangeably, the terms "pixel" and "sample" may be used interchangeably, the terms "image," "picture", "frame", "slice" and "tiles" may be used interchangeably. Usually, but not necessarily, the term "reconstructed" is used at the encoder side while "decoded" is used at the decoder side.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of an illumination compensation parameter. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

**Claims**

1. A method comprising:

   obtaining video data;
   generating a supplemental enhancement information message comprising a syntax element indicating an energy parameter related to a neural network post-processing filter;
   encoding video data;
   generating a bitstream comprising the encoded video data and the supplemental enhancement information message; and
   providing the bitstream.

2. A method comprising:

   obtaining a bitstream comprising encoded video data and a supplemental enhancement information message comprising a syntax element indicating an energy parameter related to a neural network post-processing filter;
   decoding video;
   in the case where an energy criterion is respected, modifying the decoded video by applying the neural network post-processing filter; and
   providing the modified video.

3. The method of any of claims 1 or 2, wherein the energy parameter indicates an energy consumption of the neural network post-processing filter.

4. The method of any of claims 1 or 2, wherein the energy parameter indicates an energy consumption or saving as a consequence of applying the neural network post-processing filter.

5. The method of any of claims 1 or 2, wherein the energy parameter indicates an energy balance resulting from the application of the neural network post-processing filter.

6. The method of any of claims 1 or 2, wherein the energy parameter indicates an energy consumption of the neural network post-processing filter and an energy balance resulting from the application of the neural network post-processing filter.

7. The method of any of claims 1 to 6, wherein the energy parameter is selected in a set of pre-determined values representing a percentage value.

8. The method of any of claims 1 to 6, wherein the energy parameter comprises a sign and wherein a positive sign indicates that applying the neural network post-processing filter will require more energy and a negative sign indicates that applying the neural network post-processing filter will require less energy.

9. The method of any of claims 2 to 8, wherein the energy criterion is a battery charge level of a device.

10. The method of any of claims 2 to 8, wherein the energy criterion is a parameter of a user preference setting or a device configuration parameter.

11. An apparatus comprising one or more processors configured to:

    obtain video data;
    generate a supplemental enhancement information message comprising a syntax element indicating an energy parameter related to a neural network post-processing filter;
    encode video data;

generate a bitstream comprising the encoded video data and the supplemental enhancement information message; and

provide the bitstream.

12. An apparatus comprising one or more processors configured to:

obtain a bitstream comprising encoded video data and a supplemental enhancement information message comprising a syntax element indicating an energy parameter related to a neural network post-processing filter;

decode video;

in the case where an energy criterion is respected, modify the decoded video by applying the neural network post-processing filter; and

provide the modified video.

13. The apparatus of any of claims 11 or 12, wherein the energy parameter indicates an energy consumption of the neural network post-processing filter or an energy consumption or saving as a consequence of applying the neural network post-processing filter or an energy balance resulting from the application of the neural network post-processing filter.

14. A non-transitory computer readable medium containing data content generated according to the method of any one of claims 1 to 7.

15. A computer program product comprising instructions for performing the method of any one of claims 1 to 7 when executed by one of more processors.

1000

1130    1010    1020    1070    1100

RF,
COMP,
USB,
HDMI

1140

Processor    Memory    Display → Display

1080

Audio → Speakers    1110

1090

Encoder/
Decoder    Storage
Device    Peripheral
Interface → Peripherals    1120

1030    1040

Communications
Interface ‑1050

Communications Channel
1060

# Figure 1

200

210 —220— 230 —240— 250

# Figure 2

300

Pre-encoding Processing — 301

Image Partitioning
302

325
Transform

330
Quantization

345
Entropy Coding

320

340 — Inverse Quantization

350 — Inverse Transform

355

360
Intra Prediction

305

370
Motion Compensation

365 — In-loop Filters

375 — Motion Estimation

Reference Picture Buffer — 380

## Figure 3

400

Figure 4

Figure 5

Figure 6

Figure 7

Figure 8A

Figure 8B

800

Obtain bitstream comprising encoded video
and NNPFC SEI message — 810

Decode video — 820

830 — Determine NNPF energy characteristics from NNPFC SEI
message

842 — Is energy savings expected? | yes

no

845 — Check energy criteria

KO | OK

860 — Do not apply neural network
post processing filter to
decoded video

Apply neural network post
processing filter to decoded
video — 850

Update energy
parameters — 855

870 — Provide video

# Figure 8C

| | Europäisches Patentamt<br>European Patent Office<br>Office européen des brevets | **EUROPEAN SEARCH REPORT** | **Application Number**<br>EP 24 30 6109 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "Text of ISO/IEC 23002-7:202x (2nd Ed.) DAM1 Additional SEI messages", 140. MPEG MEETING; 20221024 - 20221028; MAINZ; (MOTION PICTURE EXPERT GROUP OR ISO/IEC JTC1/SC29/WG11), , no. n21947 10 November 2022 (2022-11-10), XP030306094, Retrieved from the Internet: URL:https://dms.mpeg.expert/doc_end_user/d ocuments/140_Mainz/wg11/MDS21947_WG05_N001 58.zip WG5_N0158_Additional_SEI_23002-7_DAM1_text .pdf [retrieved on 2022-11-10] | 1-3, 10-15 | INV.<br>H04N19/117<br>H04N19/70<br>H04N19/156<br>H04N19/85 |
| Y | * section 8.28.1 on pages 4-6 * * paragraphs on "nnpfc_mode_idc" on page 7 * * table 20 on page 8 * * paragragh on "nnpfc_complexity_info_present_flag" and paragraghs on "nnpfc_num_parameters_idc" on pages 18-19, paragragh on "nnpfc_num_kmac_operations_idc" and paragragh on "nnpfc_total_kilopbyte_size" on page 19 * | 4-9 | |
| | ----- | | TECHNICAL FIELDS SEARCHED (IPC)<br><br>H04N |
| Y | US 2017/237988 A1 (NOGUES ERWAN [FR] ET AL) 17 August 2017 (2017-08-17) * [0006], [0007], [0011]-[0015], [0024], [0029]-[0031], [0034], [0039], [0049]-[0051], [0057], [0067] * | 4-9 | |
| | ----- | | |
| | -/-- | | |

The present search report has been drawn up for all claims

| Place of search | Date of completion of the search | Examiner |
|---|---|---|
| The Hague | 7 January 2025 | La, Valérie |

Europäisches
Patentamt

European
Patent Office

Office européen
des brevets

## EUROPEAN SEARCH REPORT

**Application Number**

EP 24 30 6109

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | C-H DEMARTY (INTERDIGITAL) ET AL: "[AHG9]: Neural network post-filter for recovering images from energy-aware images", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0126 ; m67196 17 April 2024 (2024-04-17), XP030317431, Retrieved from the Internet: URL:https://jvet-experts.org/doc_end_user/documents/34_Rennes/wg11/JVET-AH0126-v2.zip JVET-AH0126.docx [retrieved on 2024-04-17] * abstract * * section 1, last line in Table 1, lines 17-18 on page 3, lines 28-39 on page 4, last paragraph of section 2 on page 5, section 3 * * figure 1 * ----- | 1,2,4-15 | |
| X | US 12 022 091 B2 (INTERDIGITAL CE PATENT HOLDINGS SAS [FR]) 25 June 2024 (2024-06-25) * column 1, line 66 - column 2, line 32 * * column 2, line 61 - line 64 * * column 3, line 65 - column 4, line 8 * * column 11, line 7 - line 17 * * column 19, line 61 - column 20, line 53 * * column 21, line 15 - column 23, line 6 * * column 28, line 23 - line 35 * * column 29, line 29 - column 30, line 35 * * figure 6 * ----- -/-- | 1-15 | TECHNICAL FIELDS SEARCHED (IPC) |

The present search report has been drawn up for all claims

| Place of search | Date of completion of the search | Examiner |
|---|---|---|
| The Hague | 7 January 2025 | La, Valérie |

EPO FORM 1503 03.82 (P04C01)

Europäisches
Patentamt

European
Patent Office

Office européen
des brevets

# EUROPEAN SEARCH REPORT

**Application Number**

EP 24 30 6109

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/379482 A1 (FRANCOIS EDOUARD [FR] ET AL) 23 November 2023 (2023-11-23) * [0028], [0060], [0061], [0182], [0183], [0233], [0238] * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 7 January 2025 | La, Valérie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

      ......................................................................................
& : member of the same patent family, corresponding
    document

EPO FORM 1503 03.82 (P04C01)

## EP 4 676 043 A1

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2025

| Patent document cited in search report | Publication date | Patent family member(s) | | Publication date |
|---|---|---|---|---|
| US 2017237988 A1 | 17-08-2017 | CN | 107211127 A | 26-09-2017 |
| | | EP | 3207702 A1 | 23-08-2017 |
| | | FR | 3027480 A1 | 22-04-2016 |
| | | FR | 3027481 A1 | 22-04-2016 |
| | | US | 2017237988 A1 | 17-08-2017 |
| | | WO | 2016059196 A1 | 21-04-2016 |
| US 12022091 B2 | 25-06-2024 | CN | 116158074 A | 23-05-2023 |
| | | EP | 4186232 A1 | 31-05-2023 |
| | | US | 2023291910 A1 | 14-09-2023 |
| | | WO | 2022017845 A1 | 27-01-2022 |
| US 2023379482 A1 | 23-11-2023 | CN | 116438795 A | 14-07-2023 |
| | | EP | 4226610 A1 | 16-08-2023 |
| | | JP | 2023544711 A | 25-10-2023 |
| | | US | 2023379482 A1 | 23-11-2023 |
| | | WO | 2022073811 A1 | 14-04-2022 |